Europäisches Patentamt

European Patent Office

Office européen des brevets

(11) Veröffentlichungsnummer: **0 343 505**
**A2**

## (12) EUROPÄISCHE PATENTANMELDUNG

(21) Anmeldenummer: 89108921.1

(22) Anmeldetag: 18.05.89

(51) Int. Cl.⁴: **B65G 59/06**

(30) Priorität: 26.05.88 DE 3817853

(43) Veröffentlichungstag der Anmeldung:
29.11.89 Patentblatt 89/48

(84) Benannte Vertragsstaaten:
AT BE CH DE ES FR GB GR IT LI LU NL SE

(71) Anmelder: Honebein, Horst
Im Wiesengrund 15
D-3064 Bad Eilsen OT Heessen(DE)

(72) Erfinder: Honebein, Horst
Im Wiesengrund 15
D-3064 Bad Eilsen OT Heessen(DE)

(74) Vertreter: Thömen, Uwe, Dipl.-Ing.
Patentanwalt U. Thömen Zeppelinstrasse 5
D-3000 Hannover 1(DE)

(54) **Warenmagazin.**

(57) Ein Warenmagazin, das z.B. zum Vorhalten von Waren für einen Verkaufsautomaten dient, besteht aus wenigstens einem senkrechten Warenschacht mit einer am unteren Ende des Warenschachtes angeordneten Rückhaltevorrichtung.

Ein solches Warenmagazin soll ermöglichen, daß die Waren kontrolliert in der Reihenfolge, in der sie eingefüllt werden, entnommen werden können. Außerdem soll ein kompakter Aufbau und die Aufbewahrung und gezielte Entnahme von Gegenständen auch unterschiedlicher Größe ermöglicht werden.

Die Rückhaltevorrichtung des Warenmagazins nach der Erfindung umfaßt zu diesem Zweck einen den Warenschacht unten abschließenden Verschluß sowie eine darüber angeordnete Sperre. Dabei ist sowohl der Verschluß als auch die Sperre als Klappe ausgebildet, die schwenkbar an einer Wand des Warenschachtes angeordnet sind und in den Schacht hineingeschwenkt werden können.

FIG. 3

## Warenmagazin

Die Erfindung betrifft ein Warenmagazin nach dem Oberbegriff des Anspruchs 1.

Warenmagazine werden bevorzugt in Verkaufsautomaten verwendet, um die angebotenen Waren zur Ausgabe vorzuhalten.

Es gibt Warenmagazine, bei der die Gegenstände der Ware übereinandergestapelt sind und bei der die Rückhaltevorrichtung als Schublade ausgebildet ist, die jeweils nur die Entnahme eines Gegenstandes zur Zeit erlaubt. Dabei sind sowohl die Warenschächte als auch die Rückhaltevorrichtungen in ihren Abmessungen auf die Geometrie der die Ware bildenden Gegenstände abgestimmt. Sollen Waren angeboten werden, die sich in ihren Abmessungen voneinander unterscheiden, so sind dementsprechend mehrere unterschiedliche Warenschächte erforderlich. Aber auch hier ist Voraussetzung, daß die Gegenstände untereinander gleich sind.

Zur Aufbewahrung und zum Feilhalten von Waren varriierender Abmessungen, z.B. Süßwaren in losen Tüten oder Obst sind Warenmagazine bekannt, bei denen jeder einzelne Gegenstand gesondert aufbewahrt und gezielt entnommen werden kann. Solche Warenmagazine haben einen großen Platzbedarf.

Schließlich sind noch Warenmagazine bekannt, bei denen die Ware als loses Schüttgut in einem Behälter angeordnet ist und die Rückhaltevorrichtung als ein im Kelch des Behälters befindliches Malteserkreuz ausgebildet ist, das die jeweils im Kreuz befindliche Ware durch Drehen des Kreuzes um eine viertel Drehung in einen Auswurfschacht überführt. Bei diesem Warenmagazin besteht die Gefahr, daß Gegenstände eingeklemmt werden oder ein Nachrutschen durch Brückenbildung oberhalb des Malteserkreuzes verhindert wird. Außerdem ist die Reihenfolge der Ausgabe dem Zufall überlassen, so daß bei verderblicher Ware nicht sichergestellt werden kann, daß die Ausgabe z.B. in Abhängigkeit von Verfallsdaten oder der Nachfüllreihenfolge erfolgt.

Der Erfindung liegt die Aufgabe zugrunde, ein Warenmagazin so auszugestalten, daß bei kompaktem Aufbau Ware auch unregelmäßiger geometrischer Gestalt in vorgegebener Reihenfolge ohne Beschädigungs- und Klemmgefahr ausgegeben werden kann.

Diese Aufgabe wird bei einem Warenmagazin nach dem Oberbegriff des Anspruchs 1 durch die im kennzeichnenden Teil angegebenen Merkmale gelöst.

Durch die zweiteilige Ausbildung der Rückhaltevorrichtung lassen sich auch unregelmäßig geformte oder unterschiedlich große Gegenstände der Ware im selben Warenschacht übereinander anordnen und einzeln ausgeben. Dabei übernimmt die Sperre die Aufgabe, die in dem Warenschacht angeordnete Säule der darin vorgehaltenen Gegenstände zu halten, wenn der unterste Gegenstand durch Öffnen des Verschlußes entnommen wird. Der Vorteil der hohen Packungsdichte der Ware bleibt bei dieser Lösung erhalten. Ebenso ist sichergestellt, daß die Ware in der Reihenfolge ausgegeben wird, in der sie im Warenschacht gestapelt ist. Bei verderblichen Waren können also diejenigen mit dem spätesten Verfallsdatum oben nachgefüllt werden.

Die durch die erfindungsgemäßen Merkmale erzielten Eigenschaften eröffnen auch die Verwendung des Warenmagazins zum Vorhalten tiefgefrorener Nahrungsmittel, da die kompakte Lagerung eine sehr wirtschaftliche und nur einen geringen Aufwand erfordernde Kühlung ermöglicht. Die Gegenstände können unmittelbar nach ihrer Entnahme aus dem Warenschacht einer Wärmequelle, z.B. einem Mikrowellenofen zugeführt werden und dem Kunden dann im verzehrfähigen Zustand ausgegeben werden. Dabei läßt sich die Ware so gestalten, daß die Abmessungen eine extrem schnelle Erwärmung durch den Mikrowellenofen begünstigen und daß zum anderen die Ware auch in einer ansprechenden Form, z.B. in einer Serviette verpackt, ausgegeben werden kann. Die Ausgestaltung der Rückhaltevorrichtung nach der erfindungsgemäßen Art verhindert dabei ein Verstopfen sowie eine Beschädigung der Gegenstände.

Bei einer praktischen Ausgestaltung ist der Verschluß als schwenkbare Klappe ausgebildet, die in Schließstel lung senkrecht zu den Wänden des Warenschachtes und in Offenstellung in Flucht mit einer der Wände ausgerichtet ist.

In Schließstellung wird so erreicht, daß die Ware in einer definierten Position aufliegt, so daß die nachfolgenden Gegenstände trotz möglicher unregelmäßiger Form ebenfalls im wesentlichen in einer definierten Position lagern und von der fest angeordneten Sperre gehalten werden können. Auf diese Weise wird sichergestellt, daß jeweils nur ein Gegenstand pro Ausgabevorgang entnommen werden kann.

Weiterhin ist vorgesehen, daß die Klappe durch eine in Schließstellung drückende Feder vorgespannt ist.

Diese Ansgestaltung vereinfacht den Antrieb, da hierbei nur für das Öffnen gesorgt werden muß, das Schließen demgegenüber automatisch erfolgt.

Eine Weiterbildung sieht vor, daß die Klappe in Schließstellung verriegelt ist.

Durch diese Maßnahme wird erreicht, daß nach einer Warenausgabe die Klappe beim Nachrutschen der darüber be findlichen Waren in Schließstellung verbleibt. Die in Schließstellung drückende Feder muß also nicht so ausgelegt werden, daß sie dem Impuls der nachrutschenden Waren standhält. Dementsprechend kann auch der Antrieb, der zum Öffnen der Klappe gegen die Federkraft erforderlich ist, einfacher ausgebildet werden.

Weiterhin ist auch die Sperre als Klappe ausgebildet, wobei sie in Sperrstellung in den Warenschacht tangential gegen die Ware eingeschwenkt und in Freigabestellung in Flucht zur Wand des Warenschachtes ausgerichtet ist.

Diese Ausgestaltung ermöglicht auch Waren unterschiedlicher Gestalt und Große mit derselben Sperre im Warenschacht zurückzuhalten, da sich die Klappe den geometrischen Abmessungen durch unterschiedlich weites Einschwenken in den Warenschacht anpassen kann. Durch die Klappe wird also erreicht, daß der Querschnitt des Warenschachtes so verringert wird, daß die Ware in Sperrstellung hängenbleibt. In Freigabestellung steht dagegen der gesamte Querschnitt des Warenschachtes zur Verfügung, so daß die Ware ungehindert der Klappe nachrutschen kann.

Auch die weitere Klappe ist durch eine in Sperrstellung drückende Feder vorgespannt.

Diese Maßnahme dient wie bei der als Verschluß dienenden Klappe dazu, den Antrieb einfacher auszugestalten. Gleichzeitig gibt die Feder in Abhängigkeit der geometrischen Abmessungen der Ware nach, so daß eine Beschädigung, wie sie bei einer starren Führung der Sperre denkbar wäre, vermieden wird.

In weiterer Ausgestaltung trägt die weitere Klappe am unteren Ende einen Wulst.

Durch diesen Zusatz wird eine wirksamere Rückhaltewirkung der Sperre erzielt, so daß auch Waren, die bis zum unteren Ende der Klappe durchgerutscht sind und dabei die Sperre zu überwinden drohen, noch zuverlässig zurückgehalten werden können. Der Wulst wirkt praktisch als Formschluß mit der Ware, während die übrige Fläche der Klappe in Zusammenwirkung mit der Feder nur eine reibschlüssige Hemmung auf die Ware ausübt.

In Weiterbildung der vorgenannten Maßnahme ist an der gegenüberliegenden Wand des Warenschachtes in Höhe des an der Klappe angeordneten Wulstes ebenfalls ein Wulst vorgesehen.

Dieser Wulst unterstützt die Wirkung des an der Klappe angeordneten Wulstes, so daß die Ware nunmehr von zwei Seiten formschlüssig zurückgehalten wird und damit ein unbeabsichtigtes Durchrutschen auch schwerer Gegenstände oder im Falle überfüllter Warenschächte verhindert wird.

Bei einer praktischen Ausgestaltung ist eine Steuervorrichtung vorgesehen, durch welche in einer ersten Stellung der Verschluß in Schließstellung und die Sperre in Sperrstellung, in einer zweiten Stellung der Verschluß in Offenstellung und die Sperre in Sperrstellung, in einer dritten Stellung der Verschluß in Schließstellung und die Sperre in Freigabestellung bringbar sind und bei der nach Durchlaufen der dritten Stellung wieder die erste Stellung eingenommen wird.

Diese Steuervorrichtung stellt sicher, daß die Ware schonend behandelt wird, die Beanspruchung der Klappen durch das Gewicht der Warensäule oder den Impuls der nachrutschenden Ware vermindert wird, und daß dementsprechend auch der Antrieb zur Betätigung der Sperre und des Verschlußes auf geringen Energieverbrauch, geringen Verschleiß und hoher Lebensdauer ausgelegt werden kann.

Gemäß einer Weiterbildung umfaßt die Steuervorrichtung Exzenter-Kurvenscheiben, die mit Betätigungshebeln der Klappen in Eingriff stehen.

Diese Lösung bietet eine sehr einfache, aber präzise Ablaufsteuerung der Klappen, so daß das Ziel der zuverlässigen Ausgabe einzelner Gegenstände der Ware sowie die geringe Belastung der Klappen optimal erreicht werden kann. Außerdem besteht die Möglichkeit, den Funktionsablauf optisch kontrollieren zu können, so daß Wartungsarbeiten außerordentlich vereinfacht werden.

Eine Weiterbildung sieht vor, daß die Exzenter-Kurvenscheiben mit Schrittmotoren gekoppelt sind.

Durch diese Antriebsart ist es möglich, die örtliche und zeitliche Abfolge der Klappenstellungen genau steuern zu können und auch die Endstellungen der Klappen gezielt und prazise anfahren zu können.

Bei einer vorteilhaften Ansgestaltung des Warenmagazins sind mehrere parallel angeordnete Warenschächte vorgesehen, die gesonderte Rückhaltevorrichtungen tragen.Hierdurch läßt sich einmal die Kapazität des Warenmagazins für gleichartige Waren erhöhen, da z.B. die Schachthöhe aufgrund der zunehmenden kinetischen Energie der nachrutschenden Ware und der damit verbundenen Probleme auf den Verschleiß und die Belastung der Klappen nicht beliebig vergrößert werden kann. Andererseits ist es auch möglich, die Vielfalt des Warenangebots zu verbessern.

Eine Weiterbildung sieht vor, daß der Warenschacht bzw. die Warenschächte mit einer Wärmeisolierschicht umgeben sind.

Durch diese Weiterbildung ist das Warenmagazin auch zur Aufbewahrung von leicht verderblichen oder leicht schmelzlichen Gegenstände geeignet, und bietet auch die Voraussetzung, im Zusammenhang mit einem unter der Wärmeisolierschicht liegenden Wärmeabsorber tiefgefrorene Waren lagern zu können. Dabei ermöglicht die kompakte Ausgestaltung des Warenmagazins einen sehr sparsamen und damit wirtschaftlichen Einsatz der zum Einhalten der Tieftemperatur erforderlichen Energie.

Bei einer praktischen Ausgestaltung weisen die Warenschächte Haltevorrichtungen für Kartuschen mit vorbeschickten Waren auf und/oder sind zum Befüllen abnehmbar.

Hierdurch ist es möglich, beim Nachfüllen der Waren Kartuschen zu verwenden, die z.B. die Füllung eines Warenschachtes enthalten und einfach in den Warenschacht von oben eingesteckt werden können. Das umständliche Umfüllen der einzelnen Gegenstände entfällt, so daß das Auffüllen rationeller und bei tiefgefrorenen Waren ohne die Gefahr des Antauens und mit geringerem Energieaufwand durchgeführt werden kann.

Weiterbildungen und vorteilhafte Ausgestaltungen der Erfindung ergeben sich aus den Ansprüchen, der Beschreibung und der Zeichnung, die ein Ausführungsbeispiel veranschaulicht.

In der Zeichnung zeigen:

Fig. 1 einen Längsschnitt durch ein Warenmagazin mit mehreren Warenschächten,

Fig. 2 als Detail einen Warenschacht mit einer Rückhaltevorrichtung in einer ersten Stellung,

Fig. 3 das selbe Detail in einer zweiten Stellung, und

Fig. 4 das selbe Detail in einer dritten Stellung.

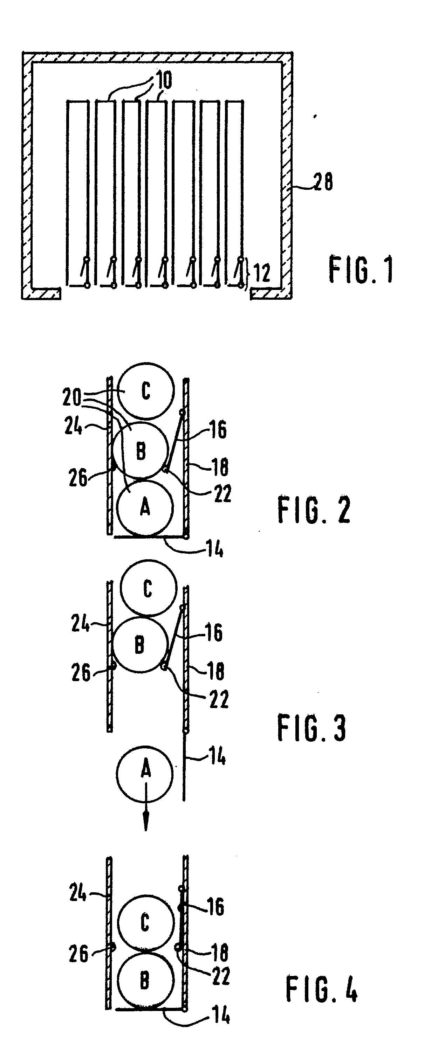

Das in Fig. 1 dargestellte Warenmagazin besteht aus mehreren parallel nebeneinander angeordneten Warenschächte 10, die am unteren Ende mit Rückhaltevorrichtungen 12 versehen sind. Die Warenschächte 10 sind mit einer Wärmeisolierschicht 28 versehen, innerhalb der ein nicht dargestellter Wärmeabsorber angeordnet ist. Damit ist das Warenmagazin geeignet, neben anderen Waren auch tiefgefrorene Lebensmittel zu lagern.

In diesem Anwendungsfall könnte unterhalb der Warenschächte ein Mikrowellenofen angeordnet werden, der geeignet ist, die entnommenen tiefgefrorenen Waren aufzutauen und auf Verzehrtemperatur zu erwärmen. Dem Mikrowellenofen wiederum würde sich bei dieser Ausgestaltung eine Ausgabevorrichtung für die Waren anschließen. Die gesamte Anordnung wird zweckmäßig als münzbetätigter Warenautomat ausgeführt.

In die einzelnen Warenschächte 10 des Warenmagazins lassen sich von oben her die vorzuhaltenden Waren einfüllen. Dabei können die Warenschächte eine solche Tiefe aufweisen, daß auch rohrförmige Gegenstände lagerbar sind. Zweckmäßig sind die Warenschächte 10 mit Haltevorrichtungen versehen, damit das Nachfüllen einfach mit Kartuschen erfolgen kann, die bereits eine Füllung übereinandergeschichteter Waren enthalten und von oben in die Warenschächte 10 eingesteckt werden können. Darüberhinaus können die Warenschächte 10 auch zum Befüllen auch einzeln entnommen werden.

Im unteren Teil der Warenschächte 10 sind die Rückhaltevorrichtungen 12 erkennbar, die jedoch in den Detailzeichnungen Fig. 2 - 4 deutlicher dargestellt sind. Jede Rückhaltevorrichtung 12 umfaßt eine den Warenschacht 10 abschließende Klappe 14 sowie eine darüber angeordnete Klappe 16. Dabei dient die Klappe 14 als Verschluß und die Klappe 16 als Sperre.

Die Klappen 14 und 16 sind schwenkbar ausgebildet, wobei ihre Schwenkachsen in der Ebene der Wand 18 des Warenschachtes 10 liegen. Die Klappe 14 kann zwei Schwenkendstellungen einnehmen, von denen die eine eine Schließstellung darstellt, in der die Klappe 14 senkrecht zu den Wänden 18 und 24 des Warenschachtes 10 liegt, und die andere die Offenstellung darstellt, in der die Klappe 14 in Flucht mit der Wand 18 ausgerichtet ist.

Bei den Schwenkstellungen der Klappe 16 handelt es sich um eine Sperrstellung, in der die Klappe 16 in den Warenschacht 10 eingeschwenkt ist und tangential an der Ware 20 anliegt und um eine Freigabestellung, in der die Klappe 16 in Flucht zur Wand 18 des Warenschachtes 10 ausgerichtet ist. Die Sperrstellung bildet dabei keine einheitliche Schwenkendstellung. Vielmehr ist sie abhängig von den geometrischen Abmessungen der Ware 20.

Die Klappen 14 und 16 sind durch Federn vorgespannt, die in die Schließstellung bzw. in die Sperrstellung drücken. Dadurch kann ein sehr einfacher Antrieb ausgebildet sein, z.B. lassen sich Exzenter-Kurvenscheiben verwenden, die mit an den Klappen angebrachten Betätigungshebeln in Eingriff stehen. Die Exzenter-Kurvenscheiben wiederum lassen sich durch Schrittmotoren antreiben.

Die Federn bewirken, daß die Klappen 14 und 16 selbstständig in die Geschlossenstellung bzw. die Sperrstellung zurückkehren, wenn die von den Exzenter-Kurvenscheiben ausgeübte Gegenkraft nachläßt.

Zur weiteren Sicherheit ist die Klappe 14 in Schließstellung verriegelt. Dadurch kann sie den Impuls der nachrutschenden Waren aufnehmen, ohne daß die Feder und damit auch der die Feder überwindende Antrieb so ausgelegt sein muß, daß der Impuls durch die nachrutschenden Waren alleine aufgenommen werden kann.

Zur Verbesserung der Rückhaltewirkung der Klappe 16 ist auf dieser am unteren Ende ein Wulst 22 angeordnet und an der der Klappe gegenüberliegenden Wand 24 ein weiterer Wulst 26. Diese beiden Wulste bieten eine zusätzliche Sicherheit dafür, daß die Ware 20 beim Öffnen der Klappe 14 von der Klappe 16 zurückgehalten werden kann. Ein Durchrutschen wird dadurch praktisch ausgeschlossen.

Bei der Warenausgabe werden drei Phasen durchlaufen, die in den Figuren 2 - 4 dargestellt sind. In der Ausgangsstellung befindet sich die Klappe 14 in Schließstellung und die Klappe 16 in Sperrstellung. Dabei liegt der untere Gegenstand A auf der Klappe 14 auf, während der darüber befindliche Gegenstand B durch die Klappe 16 zwischen dieser und der Wand 24 des Warenschachtes 10 eingeklemmt ist. Die darüber befindlichen Gegenstände, von denen nur der Gegenstand C gezeigt ist, sind auf dem Gegenstand B abgestützt.

Sofern Ware entnommen werden soll, wird die Klappe 14 in die in Fig. 3 dargestellte Offenstellung geschwenkt. Der Gegenstand A kann nun nach unten hinausfallen und wie eingangs erwähnt verwendet werden. Durch das Verharren der Klappe 16 in Sperrstellung wird verhindert, daß auch Gegenstand B und die darüberliegenden Gegenstände nach dem Öffnen der Klappe 14 hinausrutschen.

Anschließend wird die Klappe 14 geschlossen und verriegelt und die Klappe 16 in die Freigabestellung geschwenkt. Diese Stellung ist in Fig. 4 dargestellt. Durch das Zurückschwenken der Klappe 16 wird die Sperre für den Gegenstand B aufgehoben und dieser kann nun im freien Fall nach unten bis zur Klappe 14 durchrutschen. Entsprechend rutschen auch die darüberliegenden Gegenstände C, D sowie die weiteren Gegenstände der Warensäule um eine Position weiter.

Nach diesem Vorgang wird wiederum die Klappe 16 in die Sperrstellung geschwenkt, so daß nunmehr der Gegenstand C zwischen der Klappe 16 und der Wand 24 eingeklemmt ist. Diese vierte Stellung entspricht wieder der in Fig. 2 dargestellten ersten Stellung, wodurch das Warenmagazin zur erneuten Ausgabe von Ware vorbereitet ist.

Ist die Form der Gegenstände unregelmäßig oder besitzen die Gegenstände ungleiche Größen, so wird eine Sperre dennoch erreicht, da die Klappe 16 unterschiedlich weit in den Warenschacht 10 hineinschwenken kann. Der Größenvariationsbereich der Gegenstände kann sehr groß sein, so daß das Warenmagazin bei gleicher Größe universell verwendbar ist oder bei Waren extrem unterschiedlicher Größe nur wenige Größenabstufungen beim Warenmagazin erforderlich sind, um eine breite Angebotspalette abzudecken.

Gemäß einer besonders vorteilhaften Ausbildung der Erfindung ist vorgesehen, daß die einzelnen Warenschächte 10 nach Entnahme jeweils einer Ware nacheinander aktiviert werden. Dadurch wird verhindert, daß zunächst ein einziger Warenschacht vollständig entleert wird, bevor der nächste Warenschacht zum Tragen kommt.

Wenn die einzelnen Warenschächte 10 - wie vorgesehen -nacheinander aktiviert werden, erfolgt eine gleichmäßige Entnahme der einzelnen Warenschächte, was im Hinblick auf die Verderblichkeit bei Lebensmitteln von Vorteil ist.

## Ansprüche

1. Warenmagazin, bestehend aus wenigstens einem senkrechten Warenschacht (10) mit einer am unteren Ende des Warenschachtes (10) angeordneten Rückhaltevorrichtung (12), dadurch gekennzeichnet, daß die Rückhaltevorrichtung (12) einen den Warenschacht (10) abschließenden Verschluß (14) sowie eine darüber angeordnete Sperre (16) umfaßt.

2. Warenmagazin nach Anspruch 1, dadurch gekennzeichnet, daß der Verschluß als schwenkbare Klappe (14) ausgebildet ist, die in Schließstellung senkrecht zu Wänden (18, 24) des Warenschachtes (10) und in Offenstellung in Flucht mit einer dieser Wände (18, 24) aus gerichtet ist.

3. Warenmagazin nach Anspruch 1, dadurch gekennzeichnet, daß der Verschluß als Schieber ausgebildet ist, der senkrecht zu den Wänden (18, 24) des Warenschachtes (10) verschiebbar ist.

4. Warenmagazin nach Anspruch 2, dadurch gekennzeichnet, daß die Klappe (14) in Schließstellung vorgespannt ist.

5. Warenmagazin nach Anspruch 2, dadurch gekennzeichnet, daß die Klappe (14) durch eine in Schließstellung drückende Feder vorgespannt ist.

6. Warenmagazin nach Anspruch 1 oder 2, dadurch gekennzeichnet, daß die Klappe (14) in Schließstellung verriegelt ist.

7. Warenmagazin nach einem oder mehreren der Ansprüche 1 - 6, dadurch gekennzeichnet, daß auch die Sperre als Klappe (16) ausgebildet ist, wobei sie in Sperrstellung in den Warenschacht (10) tangential gegen die Ware (20) eingeschränkt und in Freigabestellung in Flucht zur Wand (18) des Warenschachtes (10) ausgerichtet ist.

8. Warenmagazin nach Anspruch 7, dadurch gekennzeichnet, daß die weitere Klappe (16) durch eine in Sperrstellung drückende Feder vorgespannt ist.

9. Warenmagazin nach Anspruch 7 oder 8, dadurch gekennzeichnet, daß die weitere Klappe (16) am unteren Ende einen Wulst (22) trägt.

10. Warenmagazin nach Anspruch 9, dadurch gekennzeichnet, daß die der weiteren Klappe (16) gegenüberliegende Wand (24) des Warenschachtes (10) in Höhe des an der Klappe (16) angeordneten Wulstes (22) ebenfalls einen Wulst (26) trägt.

11. Warenmagazin nach einem oder mehreren der Ansprüche 2 - 10, dadurch gekennzeichnet, daß eine Steuervorrichtung vorgesehen ist, durch welche in einer ersten Stellung der Verschluß (14) in Schließstellung und die Sperre (16) in Sperrstellung, in einer zweiten Stellung der Verschluß (14) in Offenstellung und die Sperre (16) in Sperrstellung, in einer dritten Stellung der Verschluß (14) in Schließstellung und die Sperre (16) in Freigabestellung bringbar ist, und durch die nach Durchlaufen der dritten Stellung wieder die erste Stellung eingenommen wird.

12. Warenmagazin nach Anspruch 11, dadurch gekennzeichnet, daß die Steuervorrichtung Exzenter-Kurvenscheiben umfaßt, die mit Betätigungshebeln der Klappen (14, 16) im Eingriff stehen.

13. Warenmagazin nach Anspruch 12, dadurch gekennzeichnet, daß die Exzenter-Kurvenscheiben mit Motoren gekoppelt sind.

14. Warenmagazin nach einem oder mehreren der Ansprüche 1 - 11, dadurch gekennzeichnet, daß mehrere parallel angeordnete Warenschächte (10) vorgesehen sind, die gesonderte Rückhaltevorrichtungen (12) tragen.

15. Warenmagazin nach einem oder mehreren der Ansprüche 1 - 14, dadurch gekennzeichnet, daß der Warenschacht bzw. die Warenschächte (10) mit einer Wärmeisolierschicht (28) umgeben sind.

16. Warenmagazin nach Anspruch 15, dadurch gekennzeichnet, daß der Warenschacht bzw. die Warenschächte (10) einen Wärmeabsorber aufweisen.

17. Warenmagazin nach einem oder mehreren der Ansprüche 1 - 14, dadurch gekennzeichnet, daß die Waren schächte (10) Haltevorrichtungen für Kartuschen mit vorgeschickten Waren aufweisen und/oder zum Befüllen abnehmbar sind.

18. Warenmagazin nach einem der vorhergehenden Ansprüche 1 - 17, gekennzeichnet durch einen Zähler zum Zählen der einzelnen Stücke der entnommenen Waren.

19. Warenmagazin nach Anspruch 18, dadurch gekennzeichnet, daß der Zähler durch den die Steuervorrichtung ansteuernden Motor beeinflußt ist.

20. Warenmagazin nach einem der vorhergehenden Ansprüche 1 - 19, dadurch gekennzeichnet, daß für alle Warenschächte ein gemeinsamer Motor vorgesehen ist, welcher eine Welle antreibt, durch welche die einzelnen Warenschächte aktivierbar sind.

21. Warenmagazin nach einem der vorhergehenden Ansprüche 1 - 20, dadurch gekennzeichnet, daß einzelne Warenschächte nach Entnahme jeweils einer Ware nacheinander aktiviert sind.

FIG. 1

FIG. 2

FIG. 3

FIG. 4

477/4